# EUROPEAN PATENT APPLICATION

(11) **EP 1 103 963 A1**
(43) Date of publication of application: **30.05.2001**
(21) Application number: 00309437.2
(22) Date of filing: 26.10.2000
(51) Int. Cl.: G11B 7/24

(54) **Phase change optical disc**

(30) Priority: 24.11.1999 KR 9952388
(71) Applicant: SAMSUNG ELECTRONICS CO., LTD., Suwon-City, Kyungki-do (KR)
(72) Inventor: Kim, Seong-sue, Seocho-gu, Seoul (KR)
(74) Representative: Chugg, David John

(57) **Abstract**

A phase change optical disc includes a substrate (21) and a first dielectric layer (22) formed on the substrate. A recording layer (23) is formed on the first dielectric layer (22) to be capable of being converted into one of an amorphous state and a crystal state according to the power of an incident beam. A second dielectric layer (24) is formed on the recording layer (23). A reflective layer (25) is formed on the second dielectric layer (24). In the phase change optical disc, the first dielectric layer (22) is formed of a material having a refractive index of 2.7 or more with respect to the incident beam.

## Description

The present invention relates to a phase change optical disk having a recording layer that changes phases according to an incident beam, and more particularly, to a phase change optical disc in which the structure of a dielectric layer disposed between a substrate and a recording layer is improved.

Phase change optical discs are widely known as optical discs which enable recording/reproduction of information by using an optical feature in which a portion of the recording layer receiving a laser beam is converted to a crystal state or an amorphous state according to the power of the incident laser beam.

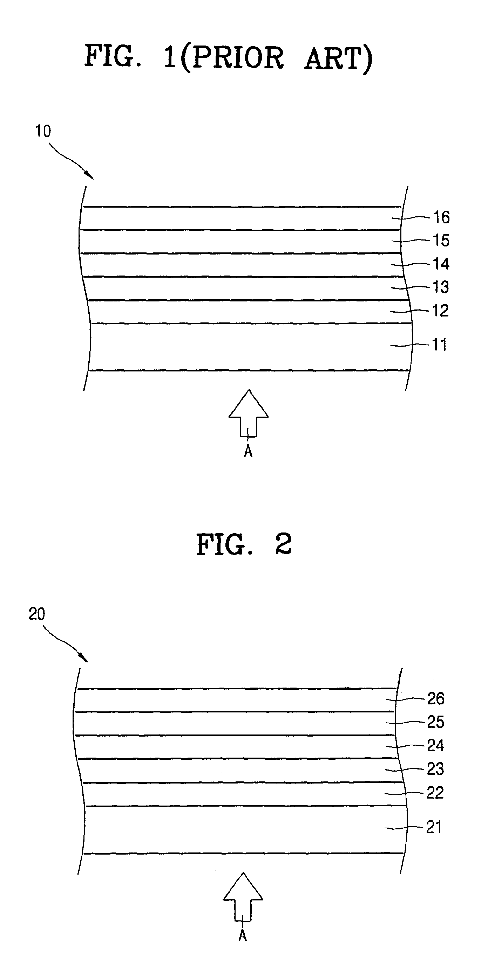

Figure 1 shows a conventional phase change optical disc. The phase change optical disc 10 includes a substrate 11 formed of a transparent material such as polycarbonate, and a first dielectric layer 12, a recording layer 13, a second dielectric layer 14, a reflective layer 15 and a protective layer 16 which are formed on the substrate 11 in order.

The first and second dielectric layers 12 and 14 are layers for protecting the substrate 11 and the reflective layer 15 when the temperature of the recording layer 13 quickly changes by an incident laser beam input to the substrate 11 in a direction indicated by an arrow A. The first and second dielectric layers 12 and 14 are formed of ZnS-SiO₂ material having a superior thermal resistance feature. The reflective layer 15 is formed of a material having a superior reflectance such as aluminum to reflect an incident beam. The protective layer 16 is formed of ultraviolet cure resin layer and protects the first and second dielectric layers 12 and 14 and the recording layer 13 together with the substrate 11. The recording layer 13 is formed of a material such as a Sb-Te-In-Se-based compound and the phase of a portion to which a laser beam is emitted may be changed according to the power of the incident laser beam. For example, during recording, a high power laser beam is emitted to the recording layer 13. Accordingly, the portion of the recording layer 13 to which the laser beam is emitted melts and then is cooled to be converted to an amorphous state, forming an information mark. The information mark in an amorphous state and the neighboring portion in a crystal state are different in the optical reflectance so that information can be recorded/reproduced due to the difference in the optical reflectance. When recorded information is erased, a laser beam having a power of about 1/3-1/2 of the power for recording is emitted. By the laser beam, the information mark portion is heated to a temperature higher than a crystallization temperature and simultaneously lower than a melting temperature, and then the portion is cooled down. Accordingly, the information mark in an amorphous state is crystallized again so that the information is erased.

To obtain a stable reproduction signal, the difference between the reflectance R_{c} of the crystal recording layer and the reflectance Rₐ of the amorphous recording layer, that is, R_{c}-Rₐ, is preferably 10% or more. Also, when overwriting that information is recorded on a surface on which information has already been written is performed, an error of a signal can be reduced only when an information mark having a desired size is recorded regardless of the state of the recording layer 13. Accordingly, the ratio between the optical absorptivity A_{c} of the crystal recording layer with respect to the optical absorptivity Aₐ of the amorphous recording layer, that is, the optical absorptivity ratio, A_{c}/Aₐ, should be at least 1.2.

For the phase change optical disc, to increase the recording density by decreasing the interval between tracks, a study of using a blue laser beam having a short wavelength less than 450 nm instead of near infrared rays or a red laser beam has recently been done. When a blue laser beam having a short wavelength is used, the diameter of an optical spot and the interval between tracks are reduced so that the recording density increases accordingly. When the interval between tracks decreases, a cross-erase phenomenon in which an information mark recorded on a neighboring track is erased during recording is serious. The cross-erase phenomenon is reduced as the optical absorptivity ratio A_{c}/Aₐ increases. Thus, to increase the recording density, the optical absorptivity ratio A_{c}/Aₐ needs to be increased to the maximum degree.

However, in the above-described phase change optical disc, as it is well known, light wave reflected by the first dielectric layer and light wave reflected by the crystal recording layer generate destructive interference. Accordingly, in the crystal recording layer, the reflectance decreases and the optical absorptivity increases while, in the amorphous recording layer, the reflectance increases and the optical absorptivity decreases. Thus, although a high optical absorptivity ratio can be maintained, it does not exceed 1.3.

With a view to solve or reduce the above problems, it is an aim of embodiments of the present invention to provide a phase change optical disc in which the structure of the dielectric layer between the substrate and the recording layer is improved to increase the optical absorptivity ratio so that the cross-erase phenomenon is reduced.

According to a first aspect of the present invention there is provided a phase change optical disc including a substrate, a first dielectric layer formed on the substrate, a recording layer formed on the first dielectric layer to be capable of being converted into one of an amorphous state and a crystal state according to the power of an incident beam, a second dielectric layer formed on the recording layer, and a reflective layer formed on the second dielectric layer, characterized in that the first dielectric layer is formed of a material having a refractive index of 2.7 or more with respect, to the incident beam.

Preferably, the first dielectric layer is formed of a material selected from a group consisting of TiO₂, ZnO, CeO₂ and ZnS.

Preferably, recording layer is formed of a Sb-Te-In-Se-based compound.

Preferably, incident beam has a wavelength of 450 nm or less.

Preferably, second dielectric layer is formed of a ZnS-SiO₂ compound.

For a better understanding of the invention, and to show how embodiments of the same may be carried into effect, reference will now be made, by way of example, to the accompanying diagrammatic drawings in which:
Figure 1 is a schematic sectional view of the conventional phase change optical disc;
Figure 2 is a schematic sectional view of a phase change optical disc according to a preferred embodiment of the present invention;
Figure 3 is a graph showing the difference in optical reflectance ratio between the crystal recording layer and the amorphous recording layer of the phase change optical discs respectively shown in Figures 1 and 2; and
Figure 4 is a graph showing the difference in optical absorptivity ratio of the crystal recording layer with respect to the amorphous recording layer of the phase change optical discs respectively shown in Figures 1 and 2.

Referring to Figure 2, a phase change optical disc 20 according to a preferred embodiment of the present invention includes, as in the conventional phase change optical disc described with reference to Figure 1, a substrate 21, a first dielectric layer 22, a recording layer 23 formed on the first dielectric layer 22, a second dielectric layer 24 formed on the recording layer 23, and a reflective layer 25 formed on the second dielectric layer 24.

The functions of the layers including the substrate 21 are the same as those of the corresponding elements in the conventional phase change optical disk 10 shown in Figure 1. That is, the substrate 21 is formed of a transparent material such as polycarbonate so that an incident beam can pass. The first and second dielectric layers 22 and 24 are provided to protect the substrate 21 and the reflective layer 25 from thermal impact when the temperature of the recording layer 23 quickly changes by a laser beam incident in a direction indicated by an arrow A. The reflective layer 25 reflects an incident laser beam. In the recording layer 23, the phase of a portion receiving a laser beam changes to an amorphous state from a crystal state or to a crystal state from an amorphous state according to the power of the incident laser beam.

The phase change optical disc according to a preferred embodiment of the present invention is distinguished from the conventional phase change optical disc 10 in the material forming a dielectric layer, that is, the first dielectric layer 22, between the substrate 21 and the recording layer 23. The first dielectric layer 22 of the phase change optical disc 20 is formed of a material having a refractive index of 2.7 or more with respect to an incident laser beam. For example, when the incident laser beam is a blue laser beam having a wavelength of 400 nm, TiO₂ having a refractive index of about 2.8 with respect to the blue laser beam may be used as a material of the first dielectric layer 22. In addition, ZnO, CeO₂ and ZnS may be used as the material of the first dielectric layer 22.

The recording layer 23 is formed of a Sb-Te-In-Se-based compound such as Sb₂Te₃-In₄Se₃, as in the recording layer 13 of the conventional phase change optical disc 10. The second dielectric layer 24 can be formed of ZnS-SiO₂. ZnS-SiO₂ has a refractive index of about 2.3 with respect to light having a wavelength of 400 nm which is lower than that of the first dielectric layer 22. The reflective layer 25 is formed of a material having a superior reflectivity such as Al. The protective layer 26 is formed of ultraviolet cure resin on the reflective layer 25 and protects the first and second dielectric layers 22 and 24 and the recording layer 23 together with the substrate 21.

Since the processes of recording and reproducing information on and from the phase change optical disc 20 according to the present invention are the same as those in the conventional phase change optical disc 10, detailed descriptions thereof will be omitted.

In the phase change optical disc 20 of the present embodiment, since the first dielectric layer 22 has a high refractive index of 2.7 or more with respect to an incident beam as described above, the amount of light reflected by the first dielectric layer 22 increases, compared to the conventional phase change optical disc 10 having the first dielectric layer 12 formed of a material having a lower refractive index of 2.4 or less with respect to an incident beam. Light waves reflected by the first dielectric layer 22 generate destructive interference with light waves reflected by the crystal recording layer so that, in the crystal recording layer, reflectance R_{c} decreases and optical absorptivity A_{c} increases and, in the amorphous recording layer, reflectance Rₐ increases and optical absorptivity Aₐ decreases. However, in the phase change optical disc 20 according to the present invention, since the amount of light reflected by the first dielectric layer 22 increases as described above, the optical absorptivity A_{c} of the crystal recording layer is remarkably increased and the optical absorptivity A_{c} of the amorphous recording layer is remarkably lowered, compared to the conventional phase change optical disc. Thus, the phase change optical disc 20 according to the present invention has an optical absorptivity ratio A_{c}/Aₐ higher than that of the conventional phase change optical disc 10.

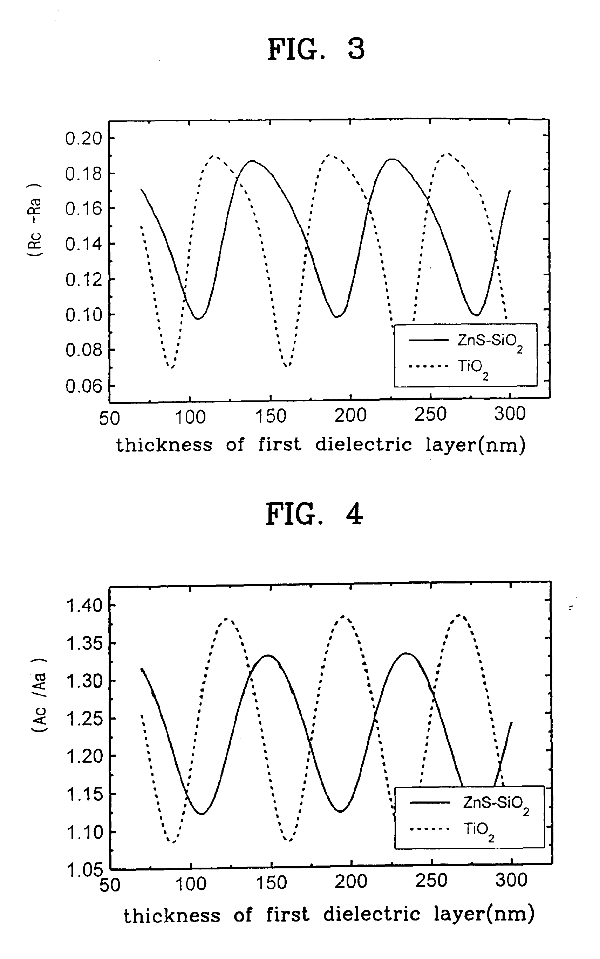

The results of comparisons between the difference in optical reflectance, R_{c}-Rₐ, and the optical absorptivity ratio, A_{c}/Aₐ according to the change in thickness of the first dielectric layer with respect to the phase change optical disc 20 according to the present invention and the conventional phase change optical disc 10, are shown in Figures 3 and 4. In the drawings, when a blue laser beam having a wavelength of 400 nm is incident as an incident beam for recording and reproduction, the phase change optical disc 20 according to the present invention, in which the first dielectric layer 22 is formed of TiO₂ having a refractive index of about 2.8 with respect to light having a wavelength of 400 nm, is shown by a dotted line. The conventional phase change optical disc 10, in which the first dielectric layer 12 is formed of ZnS-SiO₂ having a refractive index of about 2.3 with respect to light having a wavelength of 400 nm, is shown by a solid line.

As shown in Figure 3, the optical reflectance difference, R_{c}-Rₐ, in the phase change optical disc according to the present invention adopting TiO₂ as a material of the first dielectric layer 22 is lower than the minimum value of the optical reflectance difference in the conventional phase change optical disc adopting ZnS-Si₂, in the ranges of the thickness of the first dielectric layer being about 80-90 nm, 155-170 nm and so forth. In the other ranges, it can be seen that there is no remarkable difference in optical reflectance from the conventional optical disc10.

The optical absorptivity ratio A_{c}/Aₐ in the phase change optical disc 20 according to the present invention adopting TiO₂ as a material of the first dielectric layer 22 is lower than the minimum value of the optical absorptivity ratio of the conventional phase change optical disc adopting ZnS-SiO₂ in the ranges of the thickness of the first dielectric layer being about 80-95 nm, 155-170 nm and so forth. However, the optical absorptivity ratio A_{c}/Aₐ in the phase change optical disc according to the present invention is greater than the maximum value of the optical absorptivity ratio of the conventional phase change optical disc adopting ZnS-SiO₂ in the ranges of the thickness of the first dielectric layer being about 115-135 nm, 185-205 nm and so forth while the maximum value of the optical absorptivity ratio is about 1.38 in the ranges of the thickness of the first dielectric layer being about 125 nm, 195 nm and so forth.

Thus, when a blue laser beam having a wavelength of 400 nm is incident for recording/reproduction, if the first dielectric layer 22 is formed of TiO₂ to have a thickness of about 125 or 195 nm, as shown in Figure 3, the optical reflectance difference, R_{c}-Rₐ, is within the ranges almost similar to the conventional phase change optical disc and the optical absorptivity ratio, A_{c}/Aₐ, has a high value of about 1.38.

Since the optical absorptivity ratio of the phase change optical disc according to the present invention is high, generation of a cross-erase phenomenon is naturally restricted. Thus, the interval between tracks of a recording layer can be reduced to 0.4 µm or less in the phase change optical disc according to the present invention. Accordingly, the recording density of the disc increases and the disc can be used as a high density DVD (HD DVD-RW) which can be repeatedly recorded.

Although the second dielectric layer is described to be formed of a ZnS-SiO₂ compound in the above present embodiment, another appropriate material such as SiNₓ can be adopted. Also, although a laser bean is described to have a short wavelength of 400 nm in the above present embodiment, it is obvious that the technical spirit of the present invention may be applied to a case in which a laser beam having a wavelength of 450 nm or less or other wavelengths can be used.

As described above, in the phase change optical disc according to the present invention, since the dielectric layer disposed between the substrate and the recording layer is formed of a material having a refractive index of 2.7 or more with respect to an incident beam, the optical absorptivity ratio increases so that the generation of a cross-erase phenomenon is restricted and accordingly the recording density increases.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extend to any novel one, or any novel combination, of the features disclosed in this specification (including any accompanying claims, abstract and drawings), or to any novel one, or any novel combination, of the steps of any method or process so disclosed.

## Claims

1. A phase change optical disc including a substrate (21), a first dielectric layer (22) formed on the substrate (21), a recording layer (23) formed on the first dielectric layer (22) to be capable of being converted into one of an amorphous state and a crystal state according to the power of an incident beam, a second dielectric layer (24) formed on the recording layer (23), and a reflective layer (25) formed on the second dielectric layer (24), characterized in that the first dielectric layer (22) is formed of a material having a refractive index of 2.7 or more with respect to the incident beam.

2. The disc as claimed in claim 1, wherein the first dielectric layer (22) is formed of a material selected from a group consisting of TiO₂, ZnO, CeO₂ and ZnS.

3. The disc as claimed in claim 1 or 2, wherein the recording layer (23) is formed of a Sb-Te-In-Se-based compound.

4. The disc as claimed in claim 1, 2 or 3, wherein the incident beam has a wavelength of 450 nm or less.

5. The disc as claimed in claim 1, 2, 3 or 4, wherein the second dielectric layer (24) is formed of a ZnS-SiO₂ compound.
